# EUROPEAN PATENT APPLICATION

(11) **EP 1 498 821 A1**
(43) Date of publication of application: **19.01.2005**
(21) Application number: 03747199.2
(22) Date of filing: 27.02.2003
(51) Int. Cl.: G06F 13/00, H04M 1/663

(54) **INFORMATION COMMUNICATION DEVICE**

(30) Priority: 24.04.2002 JP 2002122503
(71) Applicant: MATSUSHITA ELECTRIC INDUSTRIAL CO., LTD., Kadoma-shi, Osaka 571-0050 (JP)
(72) Inventor: KAWA, Takeshi, Yokohama-shi, Kanagawa 224-0054 (JP); KIMURA, Ryosuke, Yokohama-shi, Kanagawa 226-0006 (JP)
(74) Representative: Grünecker, Kinkeldey, Stockmair & Schwanhäusser Anwaltssozietät
(86) International application number: PCT/JP2003/002246
(87) International publication number: WO 2003/091886

(57) **Abstract**

The objective of the present invention is to properly perform a process, such as deletion, for inappropriate data that are received, in accordance with age information for a memory card owner. In an information communication apparatus according to the present invention, a list of undesirable data transmission sources (electronic mail addresses) and a list of inappropriate data (character strings) are stored in a memory (16) in advance. Electronic mail received by a radio communication unit (11) is temporarily stored in the electronic mail data storage area of the memory (16), and a control unit (12) examines the received electronic mail to determine whether an undesirable data transmission source is included. When an electronic mail is received from an undesirable data transmission electronic mail address, the electronic mail is deleted. Furthermore, age information recorded on a memory card (14) is obtained, and for operators, such as underage people, for whom the reception of inappropriate data is not desirable, an electronic mail that is received and that includes inappropriate data is forcibly deleted. Other operators are permitted to selectively perform, using a simple manipulation, a process for the display or the deletion of inappropriate data that is received.

## Description

### TECHNICAL FIELD

The present invention relates to an information communication apparatus that can perform communication, such as the transmission and reception of information, by loading a memory card on which personal information is registered, and that can perform processing, such as the charging of a communication fee, for a memory card owner.

### BACKGROUND ART

An information communication apparatus has been proposed wherein a memory card on which personal information is registered is loaded to enable communication, such as the transmission and reception of information, so that a communication fee or a data fee can be charged to a memory card owner. So long as an operator employs his or her memory card to manipulate such an information communication apparatus that belongs to the others, a process such as charging is performed for the operator, so that it is easy and convenient for the operator to perform various processes by using an information communication apparatus belonging to another. Therefore, the Information communication apparatus has been already put into practical use for GSM portable telephones that have been standardized in Europe and W-CDMA portable telephones that have been defined by the ITU.

However, the above described information communication apparatus can not only perform communication by phone, but can also transmit and receive an electronic mail and exchange quantities of data across the Internet, especially audio and video data. Accordingly, for example, underage people tend to freely obtain data that are not educationally appropriate (hereinafter referred to as inappropriate data), and this has become a social problem.

On the other hand, while taking minors into account, there have been also proposed a data processing apparatus that can acquire a large amount of data and an information reception apparatus used for the Internet, by which, when inappropriate data are Included in received data, the inappropriate data are either not displayed or not translated, or instead, only data other than the inappropriate data are displayed (e.g., JP-A-10-275157 and JP-A-11-45285).

However, the data processing apparatus described in JP-A-10-275157 merely registers, In advance, inappropriate phrase data that are, for example, unpleasant expressions such as slander and libel and violent and obscure expressions that may adversely influence underage people, and merely detects in advance and does not display or translate inappropriate data that are included in obtained data. That is, no countermeasure is taken when people other than minors desire to display or translate these inappropriate data, and a problem exists in that a data display or deletion process can not be performed in accordance with the age of the operator receiving the data.

Similarly, the information reception apparatus described in JP-A-11-45285 detects, in advance, inappropriate data in information obtained through the Internet, and displays the data only after the inappropriate data have been deleted. When a password is entered, a function for the deletion of data can be halted to enable the display of all the data. However, as usage problems, the manual entry of a password is troublesome, a countermeasure is not provided in case a password is leaked and, since inappropriate data other than pre-registered data are not deleted, additional registration or updating of data must, therefore, be frequently performed, which is troublesome. Further, as well as for the above apparatus, a problem exists in that a data display or a deletion process can not be performed in accordance with the age of the operator receiving data.

Considering these shortcomings, it is one objective of the present invention to provide an information communication apparatus that obtains age information for a memory card owner, and that can selectively perform, through a simple manipulation, a process for forcibly deleting inappropriate data that are received when operators prefer not to accept the inappropriate data, and a process for displaying or deleting the inappropriate data for other operators.

### DISCLOSURE OF THE INVENTION

According to the invention, an information communication apparatus, which enables communication through an attached memory card on which personal information is recorded, and which enables a performance of a charging process for an owner of the memory card, the information communication apparatus comprising:
a receiver, which receives data transmitted from a co-communicator together with specification information for the co-communicator;
an age determinant, which obtains age information for the owner that is recorded on the memory card to determine whether the owner is younger than a predetermined age;
an inappropriate data determinant, which determines whether inappropriate data is included in the received data received by the receiver; and
a received data controller, in a state that the age determinant determines that the owner of the memory card is younger than the predetermined age, and when the inappropriate data determinant determines that the inappropriate data is included in the received data, the received data controller storing the co-communicator specification information for a transmission source of the data in a storage as co-communicator specification information for an inappropriate co-communicator and deleting the received data.

With this arrangement, when an operator who is the owner of a memory card Is below a predetermined age, received data that are determined to include inappropriate data are deleted, and since the transmission source for the data is registered as an undesirable co-communicator that transmits inappropriate data, all the data thereinafter transmitted from this source are deleted. Therefore, the display of inappropriate data for underage people, for example, can be prevented.

Furthermore, the information communication apparatus comprises a co-communicator determinant which determines whether the co-communicator specification information received by the receiver is corresponded to the co-communicator specification information for the inappropriate co-communicator, wherein the received data controller deletes the received data when the co-communicator determinant determines that the received co-communicator specification information is corresponded to the co-communicator specification information for the inappropriate co-communicator.

With this arrangement, when data is transmitted by a co-communicator that has been pre-registered as a source for the transmission of Inappropriate data, all received data can be automatically deleted without being displayed, and the labor required to browse and to delete unnecessary data can be eliminated. At this time, for example, the undesired co-communicator specification information representing an undesired co-communicator and information for inappropriate data that represents the contents of inappropriate data are stored in the storage. The co-communicator determinant determines whether a co-communicator is undesirable by, for example, determining whether the co-communicator specification information that is received matches the undesired co-communicator specification information that is stored in the storage.

Further, the age determinant is configured so as to operate when the co-communicator determinant determines that the received co-communicator specification information is not corresponded to the co-communicator specification information for the inappropriate co-communicator.

With this arrangement, since all the data transmitted by a source for inappropriate data can be deleted, regardless of an operator's age, the labor required to browse and to delete unnecessary data can be eliminated. In addition, only when data are transmitted by a co-communicator other than one that is a source for inappropriate data, need the age information for the owner be obtained from the memory card and the age of the operator examined, so that processes such as the display and deletion of received data can be efficiently performed.

The information communication apparatus further comprises a display controller, in a state that the age determinant determines that the owner of the memory card is older than a predetermined age, and when the inappropriate data determinant determines that inappropriate data is included in the received data, the display controller displaying the number of the inappropriate data, and accepting an instruction as to whether a display is provided to browse the data.

According to this arrangement, since the contents of the received data can be guessed by obtaining the number of sets of inappropriate data, the operator can easily determine whether to display or delete of data.

Moreover, when the display controller accepts an instruction to display the received data which is determined that inappropriate data is included therein, the display controller displays the received data either in an unchanged state or after the received data is processed.

With this arrangement, the operator can arbitrarily determine whether data that include inappropriate data should be browsed. And when browsing of the data is selected, the operator can also determine whether the data to be browsed should be properly processed, e.g., whether an unnecessary data portion should be deleted. Therefore, data browsing consonant with the desires of the operator can be performed.

In addition, when the display controller accepts an instruction not to display the received data that is determined that the inappropriate data is included therein, the received data controller accepts an instruction as to whether storing the received data.

With this arrangement, even when an operator does not browse received data that include inappropriate data, the data can be stored, so that when the operator desires to browse the data later, the data can again be read and displayed.

Furthermore, when the received data controller accepts an instruction not to store received data that is determined that the inappropriate data is included therein, the received data controller stores the co-communicator specification information for the transmission source of the data in the storage as the co-communicator specification information for the inappropriate co-communicator and deletes the received data.

With this arrangement, when received data including inappropriate data are neither to be browsed nor to be stored, the transmission source of the data is registered, and regarded as an undesirable co-communicator that transmits inappropriate data. Therefore, all data thereafter transmitted by the same source are deleted, and the labor required to browse and delete unnecessary data is eliminated.

### BRIEF DESCRIPTION OF THE DRAWINGS

Fig. 1 is a schematic block diagram showing the configuration of an information communication apparatus according to one embodiment of the present invention; and
Fig. 2 is a flowchart showing the processing sequence for the information communication apparatus according to the embodiment of the present invention.

It should be noted that in the drawings reference numeral 11 denotes a radio communication unit; 12, a control unit; 13, an input unit; 14, a memory card; 15, a display unit; and 16, a memory.

### BEST MODE FOR CARRYING OUT THE INVENTION

The embodiment of the present invention will now be described while referring to the drawings.

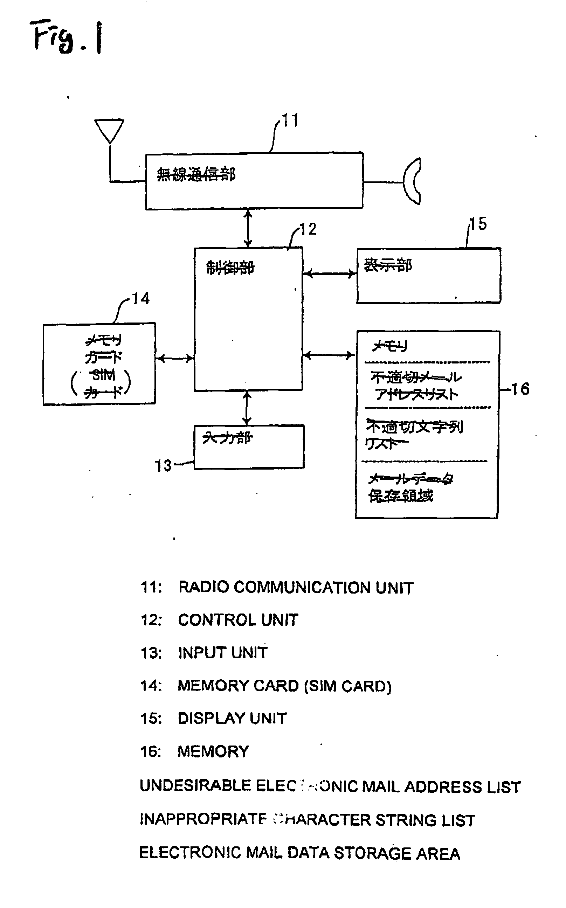

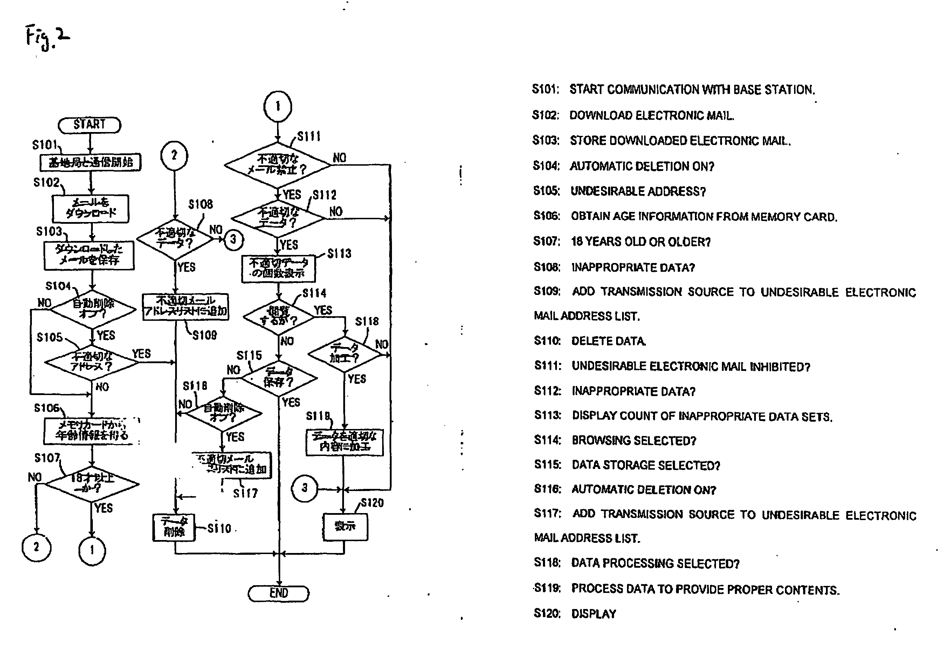

Fig. 1 is a schematic block diagram showing the configuration of an information communication apparatus according to one embodiment of the invention. Fig. 2 is a flowchart showing the processing sequence for the information communication apparatus according to the embodiment.

An information communication apparatus according to the embodiment of this invention mainly includes a radio communication unit 11 which is connected via an antenna to a transmission source to enable radio communication, a control unit 12 for controlling the entire information communication apparatus, Including the radio communication unit 11, an input unit 13 which is constituted by a keyboard including ten keys and various function keys, a memory card (SIM card) 14 on which personal data for an owner are stored in advance, a display unit 15 on which character data and image data are to be displayed, and a memory 16 including a list of inappropriate data transmission sources (electronic mail addresses), a list of inappropriate data (character strings), and a received electronic mail storage area.

The radio communication unit 11 is constituted so as to enable not only telephonic communication, but also the transmission and reception of an electronic mail and the exchange of various data via the internet, so that an operator can obtain desired data.

The memory card 14 is detachably attached to the information communication apparatus, and when the memory card 14 is removed, communication is disabled, regardless of how the input unit 13 is manipulated. Therefore, when the memory card is not loaded, only data reception is enabled. When the memory card is attached and communication is initiated, a telephone fee and a data communication fee are charged to the owner recorded on the pertinent memory card.

As is described above, the list of undesirable electronic mail addresses and the list of inappropriate character strings are stored in the memory 16, and when the radio communication unit 11 receives data, the control unit 12, which serves as a transmission source determinant and an inappropriate data determinant, employs the list of undesired electronic mail addresses and the list of inappropriate character strings stored in the memory 16 to determine, for example, whether the transmission source is an inappropriate data transmission source and whether inappropriate data is included in the received data.

The inappropriate data in this case are those including character strings representing unpleasant contents, such as slander and libel, and character strings representing violent or obscure contents that are not suitable for minors to watch or listen to. An undesirable transmission source is the electronic mall address of an undesirable transmission source that transmits the above described inappropriate data.

Next, white referring to the flowchart in Fig. 2, an explanation will be given for the electronic mail reception processing sequence performed by the information communication apparatus according to the embodiment of this invention.

First, when the memory card 14 is attached and the input unit 13 is employed to enter Inherent transmission source specification information, such as the telephone number of an arbitrary transmission source, the control unit 12 establishes wireless connection to enable communication with the transmission source via a base station (step S101). At this time, since the control unit 12 obtains and transmits, to the base station, personal information for a memory card owner recorded on the memory card 14, a telephone fee and a data communication fee are charged to the memory card owner.

When an electronic mail is received under a communication enabled state, the electronic mail is downloaded (step S102) and is sequentially stored in the received electronic mail data storage area in the memory 16 (step S103). At the next step, S104, a check is performed to determine whether an automatic deletion function, which automatically deletes electronic mall received from electronic mail addresses (inappropriate data transmission sources) that have been registered in advance, is currently in the ON state. When the function is ON, at the following step, S105, a check is performed to determine whether the electronic mail address for the received electronic mail is an undesirable electronic mail address. When the electronic mail address is not undesirable, at the succeeding step, S106, age information is obtained from the memory card 14.

When the electronic mail address is undesirable at step S105, program control is shifted to step S110 and all the electronic mail data received from the undesirable electronic mail address are deleted.

When the automatic deleting function is OFF at step S104, program control advances to step S106 without passing through step S105, and the age information is obtained from the memory card 14.

At step S107, a check is performed to determine whether the obtained age Is an age of 18 or older. When the age is less than 18, a check is performed to determine whether inappropriate data (character strings) are Included in the received data (step S108). When inappropriate data are not included, all the received data are displayed (step S120). When it is determined that inappropriate data are included, the electronic mail address of the transmission source of the data is additionally entered as an undesirable electronic mail address in the undesirable electronic mail address list in the memory 16 (step S109). Thereafter, the pertinent electronic mail data are deleted (step S110).

When it is determined at step S107 that the age is 18 or over, a check is performed to determine whether an undesirable electronic mail inhibition function, which does not display electronic mail having inappropriate contents, is ON (step S111). When this function is not ON, the contents of the electronic mail are displayed unchanged on the display unit 15 (step S120).

When the undesirable electronic mail inhibition function is ON, at the next step, S112, a check is performed to determine whether inappropriate data (character strings) are included in the received electronic mail. When there are no inappropriate data, the contents of the electronic mail are displayed unchanged on the display unit 15 (step S120). When there are inappropriate data, the number of the undesirable portions is displayed on the display unit 15 (step S113).

At step S114, a check is performed to determine whether data including inappropriate data are to be browsed. When it is determined that data are to be browsed, a check is then performed to determine whether the data should be properly processed (step S118). When it is determined that the data are not to be processed, the contents of the pertinent electronic mail are displayed unchanged on the display unit 15 (step S120). When it is determined that the data are to be processed, the contents of the electronic mail are properly processed, e.g., only undesirable portions are deleted (step S119), and the resultant data are displayed on the display unit 15 (step S120).

When it is determined at step S114 that the electronic mail data are not to be browsed, a check is then performed to determine whether the data are to be stored (step S115). When it is determined that the data are to be stored, the processing is terminated white the data Is stored in the memory 16. When it is determined that the data are not to be stored, a check is again performed to determine whether the automatic deletion function is ON (step S116). When this function is not ON, all the data in the pertinent electronic mail are deleted (step S110). When the function is ON, the electronic mail address of the transmission source for this electronic mail is additionally entered in the undesirable electronic mail address list in the memory 16 (step S117), and the electronic mail data are deleted (step S110).

As is described above, according to this embodiment, so long as the input unit 13 is employed to designate, in advance, the automatic deletion of data transmitted by undesirable electronic mail addresses, all data received from a transmission source having an undesirable electronic mail address can be automatically deleted. When the deletion of data is not designated in advance, only the age information need be obtained from data recorded on the memory card, so that, when the age information represents an age younger than 18 and when inappropriate data are included in received data, the electronic mail address of the co-communicator who sent these data can be additionally registered in the memory as an undesirable electronic mail address, and thereafter the data can be deleted. As a result, the effect obtained is that all data inappropriate for minors can be deleted.

Furthermore, in this embodiment, when the age is 18 or older, whether inappropriate data are to be browsed can be selected. In addition, when data are to be browsed, whether the inappropriate data should be processed can also be selected. Further, when data are to be stored unchanged, even though they are not to be browsed, or when data are not to be stored, whether an undesirable electronic mail address should be additionally stored in the memory can also be selected. Thus, the effect obtained is that an arbitrary desirable state can be selected In accordance with each situation.

in this embodiment, a reference (an underage person) for a decision by the age determinant is the age of 18, however, an age of 12, 16, 20 or others may be designated as needed.

Moreover, in this embodiment, the display or deletion of a received electronic mail is selectively performed in accordance with the electronic mail address of the transmission source, the age of a recipient and the contents (data) of the electronic mail. However, for the transmission or reception of data across the internet and the reception of a variety of information from other information sources, the display or deletion received data can also be selectively performed. That is, so long as the transmission source specification information for a data transmission source and the age information for a recipient are obtained, the present invention can be applied for an information communication apparatus that receives not only electronic mail, but also a variety of information across the Internet or other nets.

Also, while in this embodiment character data are employed and are the data for which an inappropriate determination must be made, audio data or video data can also be employed. For example, for audio data a well-known speech recognition means is employed to convert speech into character information. an inappropriate data list stored in the memory is examined to find the character information, and only permitted data are output as speech. As a result, the same effect can be obtained.

Further, in this embodiment, the input unit 13 is employed for the entry of instruction information and designation information in advance, and at the individual steps, determination and selection are preformed based on the information entered in advance. However, at each step, these data may be entered by using the input unit 13, and may be employed to perform the determination and selection. In this case, at the individual steps, only choices need be displayed in advance on the display unit 15, and only one of the choices need be selected by using the Input unit 13.

As is described above, In this embodiment, since the transmission source specification information for sources that transmit inappropriate data are registered in advance, data received from the transmission sources can be automatically deleted. Further, when a recipient is younger than a predetermined age (e.g., a person is underage), data determined to include inappropriate data can be automatically deleted even though the automatic deleting function is not set up. Moreover, since the specification information for the transmission source of the pertinent data is registered as an undesirable data transmission source, all the data thereafter transmitted by the corresponding transmission source can be deleted. That is, when an operator under a predetermined age performs the manipulation for a reception operation, the display of inappropriate data can be inhibited.

On the other hand, when a recipient is a predetermined age or older (e.g., a person is of legal age), whether received data, Including inappropriate data, are to be browsed can be selected. Further, when the received data are to be browsed, whether inappropriate data should be processed and displayed can also be selected. In addition, when the received data are not to be browsed, whether the data should be stored and whether the transmission source of the inappropriate data should be registered in the memory can be selected.

As is describe above, according to the information communication apparatus of this invention, for operators for whom the reception of inappropriate data is not recommended, upon being received, inappropriate data are forcibly deleted. For other operators, a process for the display or the deletion of inappropriate data that are received can be selectively performed by the use of a simple manipulation.

The present invention has been explained in detail by referring to the specific embodiment. However, it will be obvious to a person having ordinary skill in the art that the present invention can be variously modified or corrected without departing from the spirit and the scope of the invention.

The present application is based on Japanese Patent Application No. 2002-122503 filed on April 24, 2002, and the contents of this Japanese Patent Application are employed as a reference.

### INDUSTRIAL APPLICABILITY

As is described above, according to the present invention, the age information for a memory card owner is obtained, and for operators for whom the reception of inappropriate data is not recommended, inappropriate data that are received can be forcibly deleted, while for other operators, a process for the display or the deletion of inappropriate data that are received can be selectively performed by the use of a simple maniputation.

## Claims

1. An information communication apparatus, which enables communication through an attached memory card on which personal information is recorded, and which enables a performance of a charging process for an owner of the memory card, the information communication apparatus comprising:
a receiver, which receives data transmitted from a co-communicator together with specification information for the co-communicator;
an age determinant, which obtains age information for the owner that is recorded on the memory card to determine whether the owner is younger than a predetermined age;
an inappropriate data determinant, which determines whether inappropriate data is included in the received data received by the receiver, and
a received data controller, in a state that the age determinant determines that the owner of the memory card is younger than the predetermined age, and when the inappropriate data determinant determines that the inappropriate data is included in the received data, the received data controller storing the co-communicator specification information for a transmission source of the data in a storage as co-communicator specification information for an inappropriate co-communicator and deleting the received data.

2. The information communication apparatus as set forth in claim 1, further comprising a co-communicator determinant which determines whether the co-communicator specification information received by the receiver is corresponded to the co-communicator specification information for the inappropriate co-communicator,
wherein the received data controller deletes the received data when the co-communicator determinant determines that the received co-communicator specification information is corresponded to the co-communicator specification information for the inappropriate co-communicator.

3. The information communication apparatus as set forth in claim 2, wherein the age determinant is configured so as to operate when the co-communicator determinant determines that the received co-communicator specification information is not corresponded to the co-communicator specification information for the inappropriate co-communicator.

4. The information communication apparatus as set forth in claim 1, further comprising a display controller, in a state that the age determinant determines that the owner of the memory card is older than a predetermined age, and when the inappropriate data determinant determines that Inappropriate data is Included in the received data, the display controller displaying the number of the inappropriate data, and accepting an instruction as to whether a display is provided to browse the data.

5. The information communication apparatus as set forth in claim 4, wherein when the display controller accepts an instruction to display the received data which is determined that inappropriate data is included therein, the display controller displays the received data either in an unchanged state or after the received data is processed.

6. The information communication apparatus as set forth in claim 4, wherein when the display controller accepts an instruction not to display the received data that is determined that the inappropriate data is included therein, the received data controller accepts an instruction as to whether storing the received data.

7. The information communication apparatus as set forth in claim 6, wherein when the received data controller accepts an instruction not to store received data that is determined that the inappropriate data is included therein, the received data controller stores the co-communicator specification information for the transmission source of the data in the storage as the co-communicator specification information for the inappropriate co-communicator and deletes the received data.
